# EUROPEAN PATENT APPLICATION

(11) **EP 4 836 365 A1**
(43) Date of publication of application: **04.11.2026**
(21) Application number: 26165465.1
(22) Date of filing: 17.03.2026
(51) Int. Cl.: H04L 27/22, H04L 25/06, H04L 27/38, H04L 27/20, H04L 27/36

(54) **SYSTEMS AND METHODS FOR REDUCED COMPLEXITY SOFT DECISION SYMBOL GENERATION FOR DISCRETE MODULATED SIGNALS**

(30) Priority: 10.04.2025 US 202519175794
(71) Applicant: L3Harris Technologies, Inc., Melbourne, FL 32919 (US)
(72) Inventor: SCHLEGEL, Christian, Melbourne, 32919 (US); GIBSON, L. Andrew, Melbourne, 32919 (US); KELLER, David R., Melbourne, 32919 (US); KIMANI, Alexander, Melbourne, 32919 (US)
(74) Representative: Schmidt, Steffen J.

(57) **Abstract**

Systems and methods for generating a soft value for a non-QPSK modulation symbol. The methods comprise: decomposing a non-QPSK signal constellation into QPSK sub-constellations; affinely transforming the QPSK sub-constellations that are constituents of a constellation for a non-QPSK modulation scheme; applying soft QPSK decoders to the affinely transformed sub-constellations to generate QPSK sub-constellation soft symbols; inverse affinely transforming the QPSK sub-constellation soft symbols; and generating a soft decision estimation for the non-QPSK symbol as a weighted function of the inverse affinely transformed QPSK sub-constellation soft symbols.

## Description

### GOVERNMENT RIGHTS

This invention was made with Government support under contract H92222-17-D-0022 awarded by United States Special Operations Command (USSOCOM). The Government may have certain rights in this invention.

### BACKGROUND

### Description of the Related Art

There are many communication devices known in the art. Such communication devices include, but are not limited to, satellite communication devices and/or radios. The communication devices may experience interference resulting from other communication signals. This interference can degrade performance of the communication devices.

### SUMMARY

This document concerns implementing systems and methods for generating a soft value for a non-QPSK modulation symbol. The methods comprising: decomposing a non-QPSK signal constellation into QPSK sub-constellations; affinely transforming the QPSK sub-constellations that are constituents of a constellation for a non-QPSK modulation scheme, such as rotating; applying soft QPSK decoders to the affinely transformed sub-constellations to generate QPSK sub-constellation soft symbols; inverse affinely transforming the QPSK sub-constellation soft symbols; and generating a soft decision estimation for the non-QPSK symbol as a weighted function of the inverse affinely transformed QPSK sub-constellation soft symbols.

This document also concerns a soft demodulator. The soft demodulator comprises a circuit that generates soft values for the binary labels of a non-QPSK symbol, such as log-likelihood values, from an input signal by: affinely transforming QPSK sub-constellations that are constituents of a constellation for a non-QPSK modulation scheme; applying soft QPSK demodulator to the thus transformed sub-constellations to generate soft symbol values for the binary labels of the sub-constellation; combining these binary soft values into the soft values for the binary labels of the non-QPSK constellation.

### BRIEF DESCRIPTION OF THE DRAWINGS

This disclosure is facilitated by reference to the following drawing figures, in which like numerals represent like items throughout the figures.
FIGS. 1-2 provide illustrations of a resource-optimized soft symbol generator for a QPSK constellation or sub-constellation.
FIG. 3 provides an illustration showing partitioning of an 8PSK constellation into two constituent QPSK constellations.
FIG. 4 provides an illustration of a system implementing the present solution.
FIG. 5 provides an illustration of a communication device architecture.
FIG. 6 provides an illustration of a receiver architecture including an interference cancelation device.
FIG. 7 shows an illustrative architecture for an interference cancellation device implementing a soft symbol decision approach of the present solution for mitigating interference.
FIG. 8 shows an illustrative architecture for a signal extractor using a soft symbol forming device.
FIG. 9 shows an illustrative architecture for a soft symbol forming device for an 8PSK constellation implementing the present solution, and using two QPSK soft symbol formers on oppositely rotated QPSK sub-constellations.
FIG. 10 provides constellation diagrams that are useful for understanding operations of the soft demodulator shown in FIG. 9.
FIG. 11 shows another illustrative architecture for a soft symbol forming device for an 8-PSK constellation implementing the present solution.
FIG. 12 provides a flow diagram of an illustrative method for an illustrative method **1200** for mitigating interference.
FIG. 13 provides a flow diagram of an illustrative method for generating soft values in accordance with the present solution.
FIGS. 14-15 each provides a flow diagram of a method for generating a soft value for a non-QPSK symbol in an input signal.
FIG. 16 provides an illustration of an architecture for a computing device.

### DETAILED DESCRIPTION

It will be readily understood that the solution described herein and illustrated in the appended figures could be implemented in a variety of different configurations. Thus, the following more detailed description, as represented in the figures, is not intended to limit the scope of the present disclosure but is merely representative of certain implementations in different scenarios. While the various aspects are presented in the drawings, the drawings are not necessarily drawn to scale unless specifically indicated.

Reference throughout this specification to features, advantages, or similar language does not imply that all the features and advantages that may be realized should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

A primary use of the soft symbol former is to generate soft symbols for the purpose of removal of a digitally (8PSK or others) modulated interference signal. The soft symbol former may be used in other applications. Some demodulators make use of soft decisions rather than hard decisions to improve the performance of Forward Error Correction (FEC) circuits used with the demodulators to correct errors. When symbols are mapped into data bits, soft decisions are more accurate than hard decisions, and therefore result in better performance of the decoder and modem. However, with current implementations of eight phase shift keying (8PSK) soft decision, very large amounts of memory (e.g., random access memory (RAM)) are needed. This reduces the number of demodulator modules that fit into a field programmable gate array (FPGA) part. With the present solution, 8PSK soft decision and other higher order modulations can use soft decision mapping and fit more easily into FPGAs because of the reduction of memory (e.g., RAMs) and other computational circuit elements.

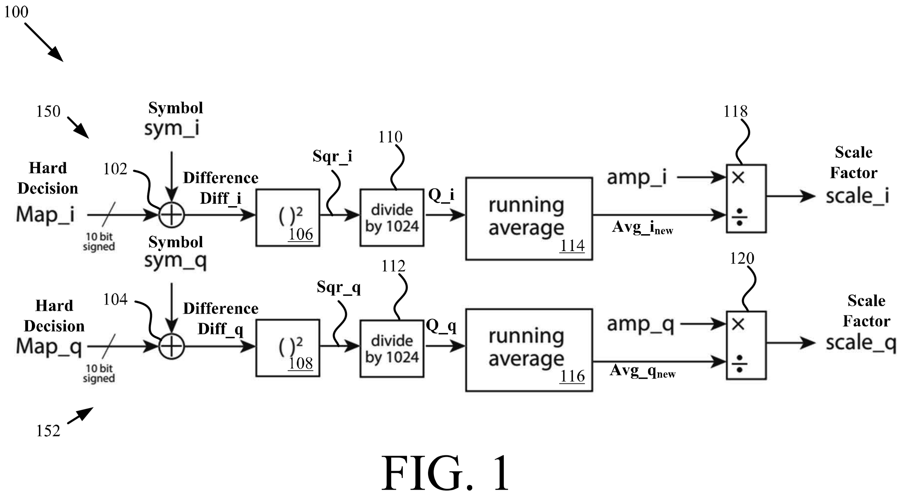

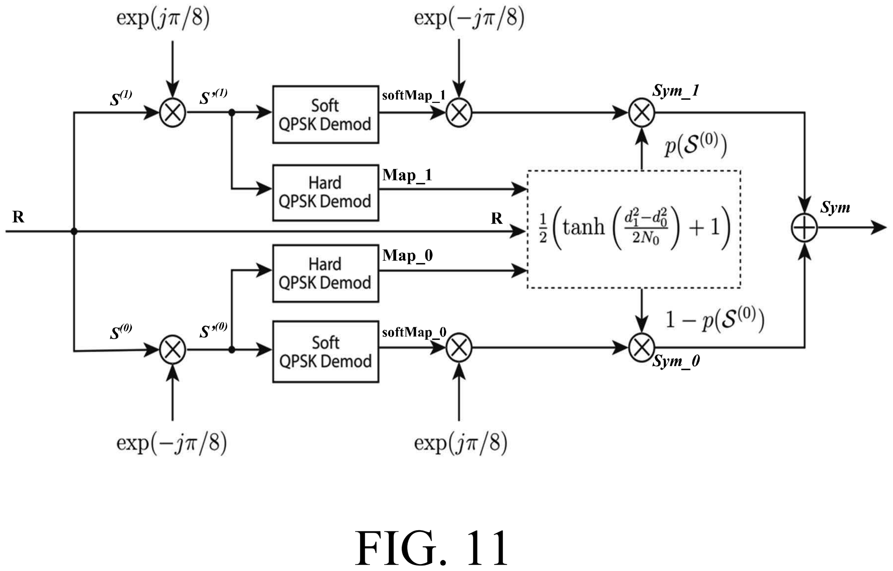

A soft symbol generator may perform the following operations. (1) The noise level on a communication channel with respect to a QPSK sub-constellation is converted into scale factors, by computing a running average of the square of the difference between received symbols and corresponding QPSK hard decisions. This process is illustrated by circuit **100** of FIG. 1. Circuit **100** is described below in relation to scenarios in which each symbol comprises a complex number with an I component and a Q component. Operations of circuit **100** may be clocked at a rate at which a source is transmitting the symbols in a carrier wave over the communication channel. Circuit **100** comprises an integral part the soft QPSK demodulators in FIG. 11.

Circuit **100** comprises two branches **150** and **152.** A first branch **150** is provided for processing the I component, and a second branch **152** is provided for processing the Q component. A single bit +1 or -1 for the I or Q component of a QPSK symbol is processed in each branch at any given time. Each branch comprises a first combiner **102, 104,** a square root operator **106, 108,** an optional divider **110, 112,** a running average operator **114, 116,** and a second combiner **118, 120.** The optional divider(s) may be provided to save gates. If there are more resources, then the divider(s) would not be used. The first combiner **102, 104** combines a received symbol and a corresponding hard decision to obtain a difference therebetween. Specifically, combiner **102** combines the I component **sym_i** of the symbol and the I component **Map_i** of the hard decision to obtain a difference **Diff_i** thereof. Combiner **104** combines the Q component **sym_q** of the symbol and the Q component **Map_q** of the hard decision to obtain a difference **Diff_q** thereof. The combination operations of combiners **102, 104** may be defined by the following mathematical equations (1) and (2). $Diff _ i = sym _ i - Map _ i$ (1) $Diff _ q = sym _ q - Map _ q$ (2)

Next, squaring operations are performed in blocks **106, 108** to obtain the square value of the difference. The squaring operations of blocks **106, 108** may be defined by the following mathematical equations (3) and (4). $Sqr _ i = {\left(Diff_i\right)}^{2}$ (3) $Sqr _ q = {\left(Diff_q\right)}^{2}$ (4)

The result of the squaring operations is then divided by a number N (e.g., 1024) to move the squaring result into the range of active bits chosen for its numeric representation. The division operations of block **110, 112** may be defined by the following mathematical equations (5) and (6). $Q _ i = Sqr _ i / N$ (5) $Q _ q = Sqr _ q / N$ (6) where **Q_i** and **Q_q** represent quotients. A division by a power of 2 results in a simple bit shift and has very low implementation complexity.

The quotients are used to compute running averages in block **114, 116.** This may be implemented by accumulating 2^X Q_i's or Q_q's and then shifting off X bits. Each running average **Avg_i_{new}** and **Avg_q_{new}** represents an estimate of a noise level in the received signal.

Noise power affects how strongly an input signal is weighted. If there is a relatively large amount of noise, then the input signal is considered unreliable. If there is a relatively small amount of noise, then the input signal is considered reliable. In this regard, the running averages are converted or transformed into scale factors in blocks **118, 120** that can be used to scale the input signal depending on the noise therein. The operations of blocks **118, 120** generally involve dividing a signal amplitude by noise power. The scale factors output from blocks **118, 120** may be defined by the following mathematical equations (7) and (8). $scale _ i = amp _ i / Avg _ {i}_{new}$ (7) $scale _ q = amp _ q / Avg _ {q}_{new}$ (8) where **amp_i** and **amp_q** represent signal amplitude. Each scale factor **scale_i, scale_q** is subsequently applied to scale up or down the input signal depending on the noise currently measured in a signal stream.

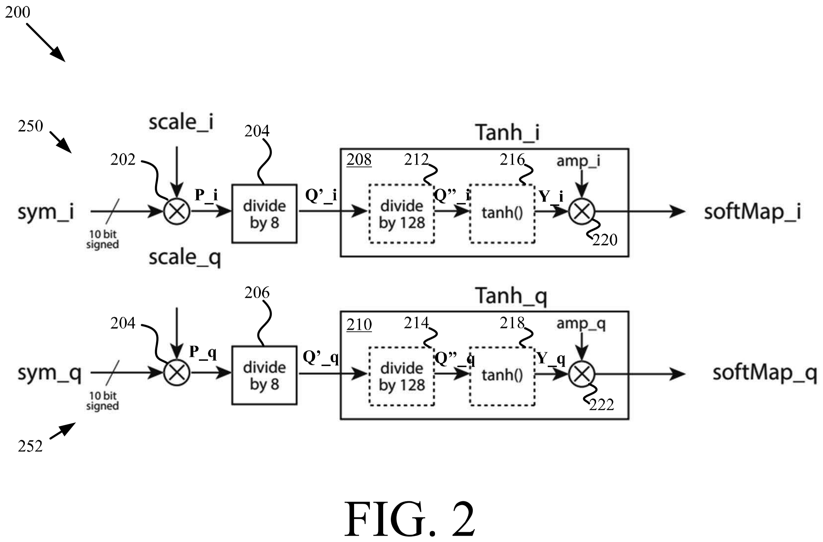

The scale factors **scale_i, scale_q** are then used to obtain soft decisions for the I component and the Q component of the symbol. For quadrature phase shift keying (QPSK), the I and Q channels are independent binary phase shift keying (BPSK) sub channels and have a simple binary soft bit generating circuit. The soft bits for both found separately from an **M** bit addressable by **M** bit wide output RAM. **M** is any integer selected in accordance with a given application. For example, **M** is selected to be ten. The soft decision operations are illustrated by circuit **200** of FIG. 2.

Circuit **200** comprises two branches **250, 252.** A first branch **250** is provided for processing the I component of the symbol, and a second branch **252** is provided for processing the Q component of the system. Each branch comprises a combiner **202, 204,** a divider **204, 206,** and a soft decision operator **208, 210.** Combiner **202, 204** is configured to combine the I or Q component of the symbol **sym_i, sym_q** with the corresponding scale factor **scale_i, scale_q.** These combiner operations may be defined by the following mathematical equations (9) and (10). $P _ i = sym _ i \times scale _ i$ (9) $P _ q = sym _ q \times scale _ q$ (10) where **P_i** and **P_q** represent products. The product is divided by a number **K** in block **204, 206. K** is an integer selected in accordance with a given application. For example, **K** is selected to be eight. The divisional operations may be performed to convert large data values into smaller units that are more manageable for subsequent computational operations and/or data storage. The division operations of blocks **204, 206** may be defined by the following mathematical equations (11) and (12). $Q ′ _ i = P _ i / K$ (11) $Q ′ _ q = P _ q / K$ (12) where **Q'**_i and **Q'**_q represent quotients. The quotients are then processed in bocks **208, 210** to obtain soft decisions **softMap_i, softMap_q** for the symbol. Operations in blocks **208, 210** generally involve divisions operation in sub-blocks **212, 214,** hyperbolic tangent function operations in sub-blocks **216, 218,** and combination operations in blocks **220, 222.** The operations performed in blocks **208, 210** may be defined by the following mathematical equations (13)-(18). $Q " _ i = Q ′ _ i / L$ (13) $Y _ i = tanh \left(Q"_i\right)$ (14) $softMap _ i = Y _ i ⋅ amp _ i$ (15) $Q " _ q = Q ′ _ q / L$ (16) $Y _ q = tanh \left(Q"_q\right)$ (17) $softMap _ q = Y _ q ⋅ amp _ q$ (18) where **L** is an integer selected in accordance with a given application. For example, **L** is selected to be one hundred twenty-eight. The division operations of blocks **212, 214** may optionally be performed to split large data chunks into smaller pieces, each containing **L** bits of information. The tanh( ) operations may be implemented in look-up table(s) (LUT(s)).

The soft values **softMap_i** and **softMap_q** may then be used in various applications. The soft values **softMap_i** and **softMap_q** may be used to subtract an interference signal from a received signal. In this case, the soft values **softMap_i** and **softMap_q** may be input into a re-modulator to build a copy of an interference signal.

For 8PSK, I and Q components cannot be separated and must be addressed jointly. Even after taking advantage of symmetries, addressing only a single quadrant, the soft decision 8PSK ROM is sixty-four times larger than the QPSK ROM.

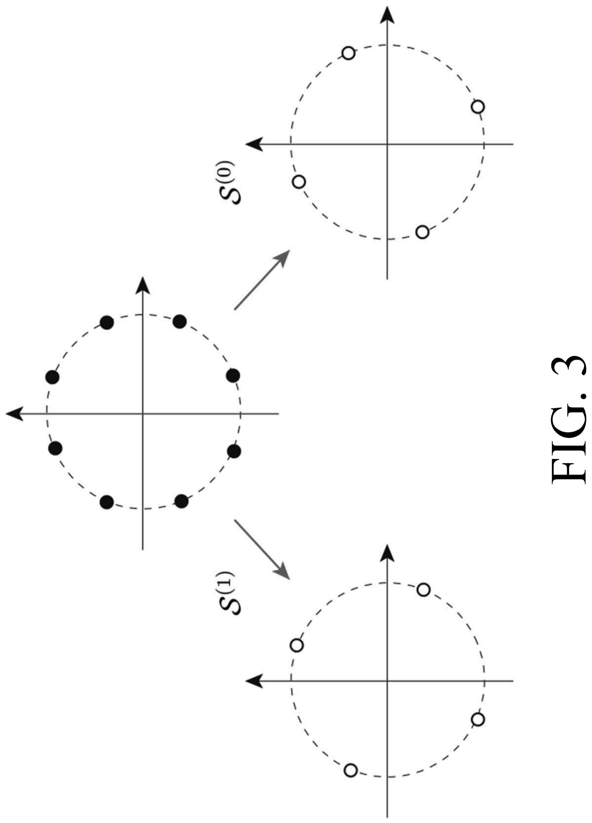

The present solution addresses this issue associated with 8PSK and other non-QPSK constellations. The present solution generally involves partitioning an 8PSK constellation into two constituent QPSK constellations, as shown in FIG. 3. The purpose of this is to be able to operate on each QPSK constellation separately, and then combine their soft symbols into the optimal 8PSK soft symbol. Simulations and analysis have shown that the present solution produces soft symbols with the same reliability as those generated from a direct implementation of the relevant equations for an 8PSK soft symbol former.

This document generally concerns novel systems and methods for generating soft symbols from an input signal. The methods may be applied to a plurality of different modulation or encoding types. The modulation or encoding types can include, but are not limited to, 8PSK, 16PSK, and 16QAM. The methods may be implemented in a soft demodulator.

The soft symbols may be used to cancel interference. Accordingly, this document also concerns novel systems and methods for operating a communication device to cancel interference at a receiver. The interference is canceled using soft symbols obtained in accordance with the present solution. The soft symbols provide a more accurate representation of an interference signal compared to hard decisions, thus allowing for more effective interference cancellation. The present solution is not limited to interference cancellation applications. The present solution can be used in other applications, such as generic soft symbol generation, forward error correction, signal reconstruction, probabilistic estimation of a transmit signal, signal decoding applications, turbo equalization, turbo or concatenated code modulation, log likelihood ratio determination, and/or any other application where soft symbols of the symbols or constituent bits may be needed or required.

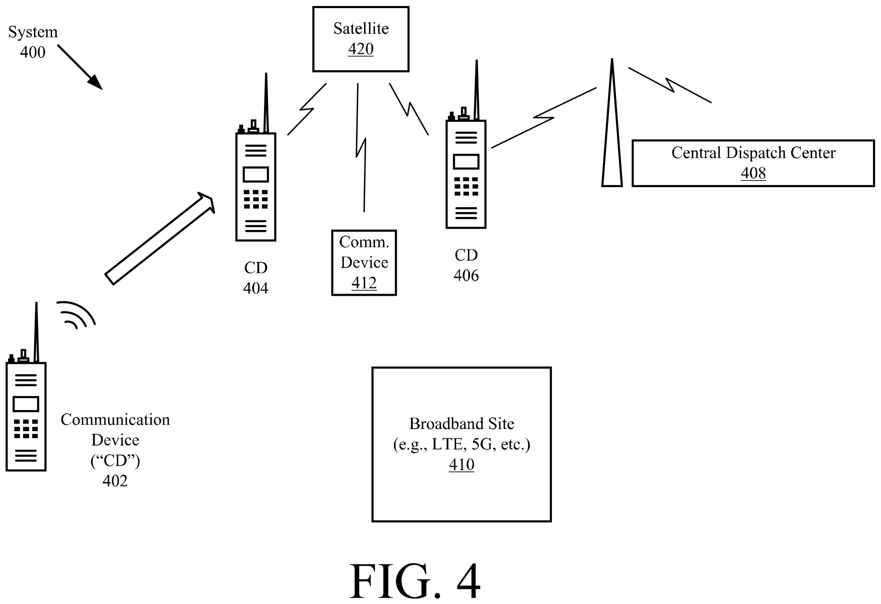

An illustrative system 400 implementing the present solution is shown in FIG. 4. System **400** comprises a plurality of communication devices **402, 404, 406,** a central dispatch center (CDC) **408,** a broadband site **410,** and satellites **420,** 422. The communication devices **402-406** include, but are not limited to, a portable radio, a fixed radio with a static location, a smart phone, a ground station, and/or a base station. The broadband site **410** includes, but is not limited to, a land mobile radio (LMR) site, a 2G cellular site, a 3G cellular site, a 4G cellular site, and/or a 5G cellular site. Any known or to be known CDC **408** and broadband site **410** can be employed here.

During operation of system **400,** signals at the satellite **420** need processing in accordance with the present solution since that is where interference may be occurring. One scenario is where communication devices all point to the sky, possibly to different satellites **420** and **422,** but that unwanted signals impinge on satellite **420.** In other scenarios, interference may be caused by other sources such as the broadband site **410.**

As shown in FIG. 4, signals are communicated between the communication devices **402-406,** between one or more communication devices **404, 406, 412** and the satellite **420,** and/or between one or more communication devices **406** and the CDC **408.** For example, communication device **402** communicates a signal to communication device **404,** communication devices **404-406** communicate signals to satellite **420,** and CDC **408** communicates a signal to communication device **406.** Communication devices **404** and **406** perform operations to mitigate interference caused by the broadband site **410** on a given RF communication channel and/or other communication device **412** on a satellite communication channel. The manner in which communication devices **404** and **406** mitigate the interference to signals will become evident as the discussion progresses.

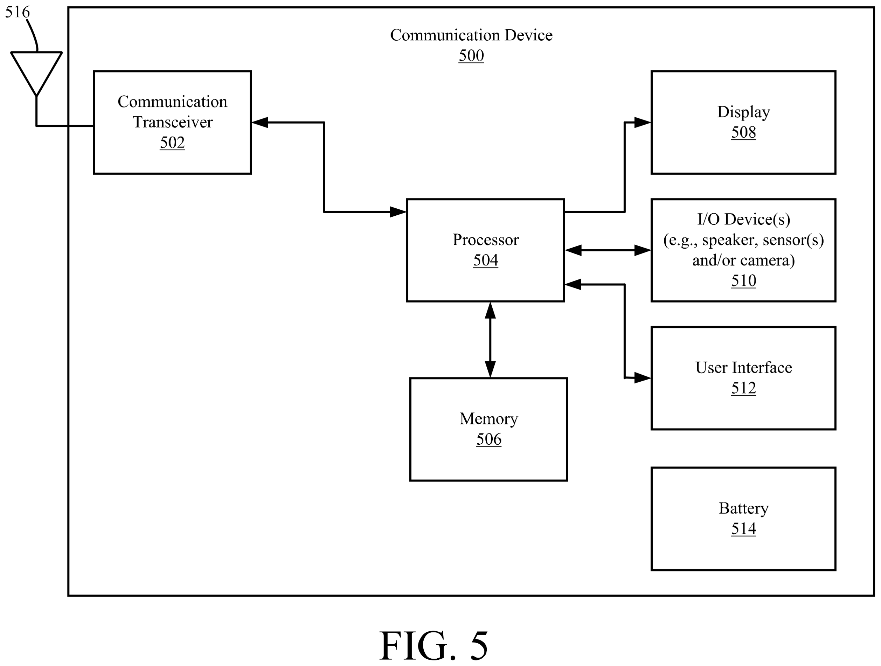

Referring now to FIG. 5, there is provided an illustration of an example architecture for a communication device **500** which is configured for carrying out the various methods described herein for mitigating the signal interference. Communication devices **402-406** of FIG. 4 are the same as or similar to communication device **500.** As such, the discussion provided below in relation to communication device **500** is sufficient for understanding communication devices **402-406** of FIG. 4. Communication device **500** can include more or less components than that shown in FIG. 5 in accordance with a given application. For example, communication device **500** can include one or both components **508** and **310.** The present solution is not limited in this regard.

Communication device **500** comprises a communication transceiver **502** coupled to an antenna **516.** The LMR communication transceiver can comprise one or more components such as a processor, an application specific circuit, a programmable logic device, a digital signal processor, or other circuit programmed to perform the functions described herein. The communication transceiver **502** can enable end-to-end communication services in a manner known in the art. In this regard, the communication transceiver can facilitate communication of data (e.g., voice data and/or media content) from the communication device **500** over a network and/or communications channel (e.g., a satellite communication channel).

Communication transceiver **502** can include, but is not limited to, a radio transceiver, a satellite transceiver, and/or a cellular network communication transceiver. Communication transceiver **502** is connected to a processor **504** comprising an electronic circuit. During operation, processor **504** is configured to control communication transceiver **502** for providing communication services. Processor **504** also facilitates mitigation of interference to signals. The manner in which the processor facilitates interference mitigation will become evident as the discussion progresses.

A memory **506,** display **508,** user interface **512** and input/output (I/O) device(s) **510** are also connected to processor **504.** Processor **504** may be configured to collect and store data generated by the I/O device(s) **510** and/or external devices (not shown). The I/O device(s) **510** can include, but are not limited to, a speaker, a microphone, sensor(s) (e.g., a temperature sensor and/or a humidity sensor), and/or a camera. Data stored in memory **506** can include, but is not limited to, one or more look-up tables or databases which facilitate selection of communication groups or specific communication device. The user interface **512** includes, but is not limited to, a plurality of user depressible buttons that may be used, for example, for entering numerical inputs and selecting various functions of the communication device **500.** This portion of the user interface may be configured as a keypad. Additional control buttons and/or rotatable knobs may also be provided with the user interface **512.** A battery **514** or other power source may be provided for powering the components of the communication device **500.** The battery **514** may comprise a rechargeable and/or replaceable battery. Batteries are well known in the art, and therefore will not be discussed here.

The communication device architecture shown in FIG. 5 should be understood to be one possible example of a communication device system which can be used in connection with the various implementations disclosed herein. However, the systems and methods disclosed herein are not limited in this regard and any other suitable communication device system architecture can also be used without limitation. Applications that can include the apparatus and systems broadly include a variety of electronic and computer systems. In some scenarios, certain functions can be implemented in two or more specific interconnected hardware modules or devices with related control and data signals communicated between and through the modules, or as portions of an application-specific integrated circuit. Thus, the illustrative system is applicable to software, firmware, and hardware implementations.

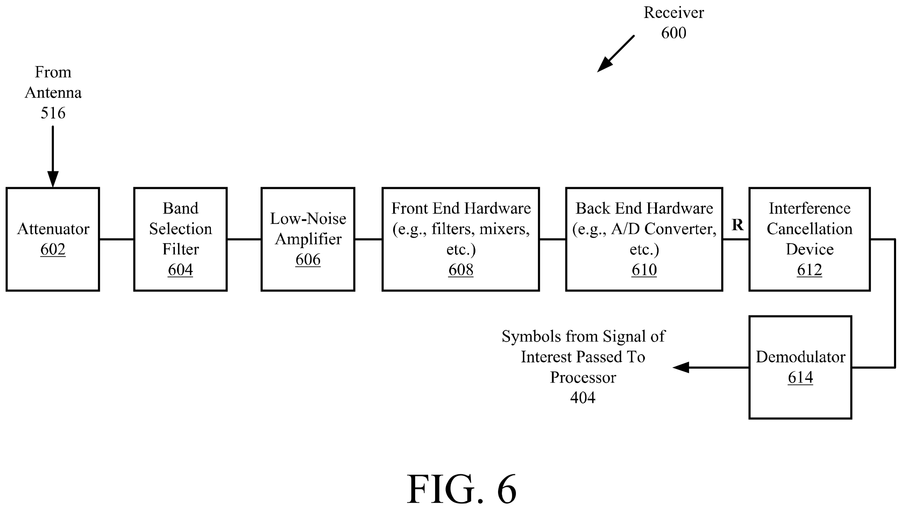

Referring now to FIG. 6, there is provided a more detailed illustration of an illustrative receiver portion **600** of the communication transceiver **502.** Receiver **600** comprises an attenuator **602,** a band selection filter **604,** a Low-Noise Amplifier (LNA) **606,** front end hardware **608,** back-end hardware **610,** an interference cancellation device **612** and a demodulator **614.** Each of the listed devices **602-610** and **614** is known in the art, and therefore will not be described herein. The interference cancellation device **612** implements the present solution and is generally configured to remove interfering signals from received signals. The resulting signal is passed from the interference cancellation device **612** to the demodulator so that, for example, symbols can be extracted therefrom. The manner in which the signal interference is canceled or otherwise removed from received signals will become evident as the discussion progresses.

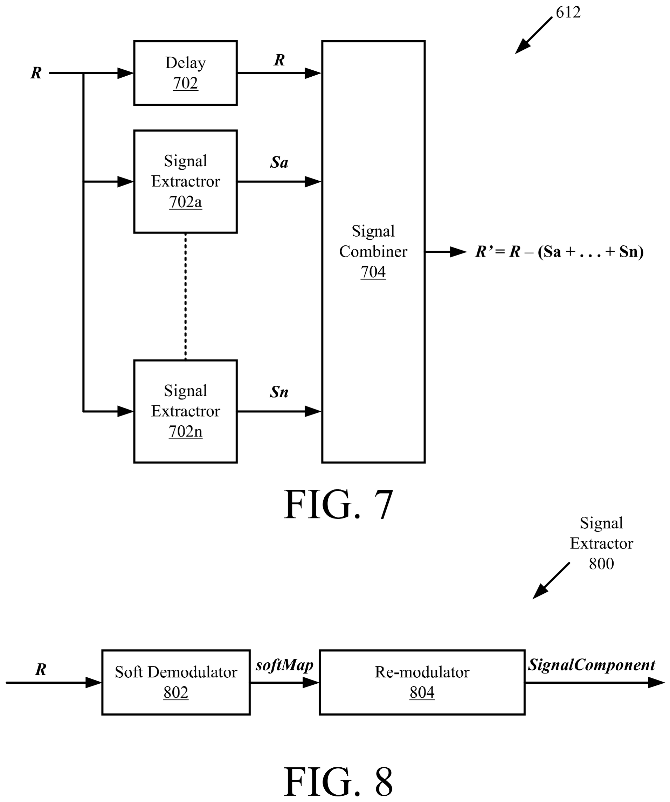

Referring now to FIG. 7, there is provided an illustrative architecture for the interference cancellation device **612.** The architecture of FIG. 7 may be cascaded. The interference cancellation device **612** comprises a delay **702,** signal extractors **702a,** ..., **702n** and a signal combiner **704.** Each signal extractor is generally configured to excise or otherwise extract an interference signal component from the received signal ***R.*** The sum of the interference signal components ***Sa,*** ..., ***Sn*** is then subtracted from the delayed received signal ***R*** at the signal combiner **704** to produce a signal ***R**'* representing the SOI.

An illustrative architecture **800** for a signal extractor is shown in FIG. 8. Each signal **702a,** ..., **702n** of FIG. 7 can be the same as or similar to signal extractor **800.** Thus, the discussion of signal extractor **800** is sufficient for understanding signal extractors **702a,** ..., **702n** of FIG. 7.

As shown in FIG. 8, signal extractor **800** comprises a soft demodulator **802** and a re-modulator **804.** Soft demodulator **802** comprises an electronic circuit and/or computer program that is(are) configured to extract information that was modulated onto a carrier wave in the form of soft symbols. In this regard, the soft demodulator **802** receives a signal ***R*** and generates softvalue(s) ***softMap*** for symbols of a given signal component contained therein. The softvalue(s) ***softMap*** are passed to the re-modulator **804.** Re-modulator **804** performs operations to vary one or more properties of a waveform to produce a waveform representing the signal component (e.g., an interfering signal).

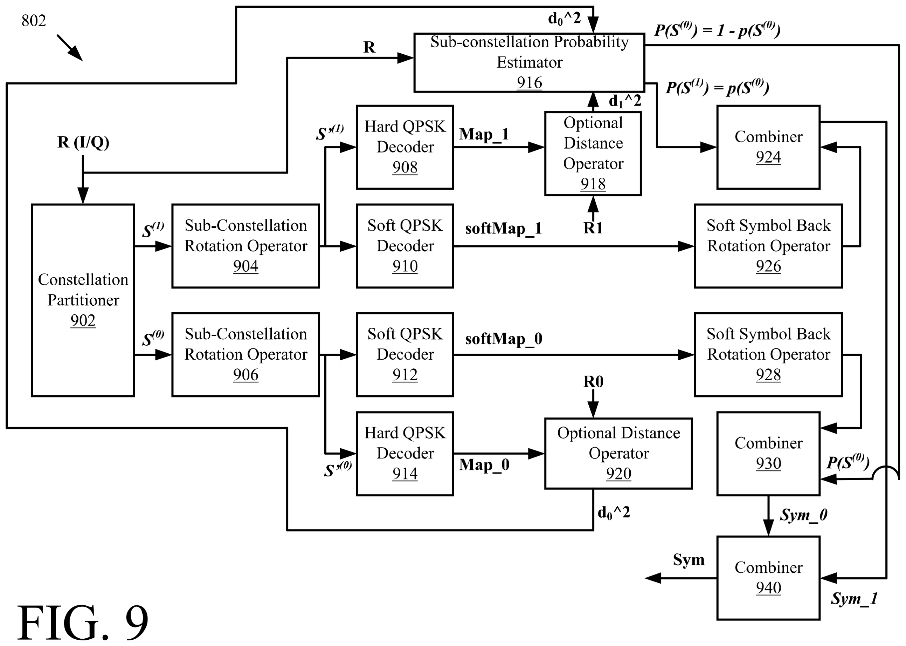

An illustrative architecture for an 8PSK soft demodulator for the soft demodulator **802** is provided in FIG. 9. It should be noted here that concepts are described in relation to FIG. 9 to facilitate an understanding of the present solution, but these concepts may be implemented in various ways in hardware and/or software. Thus, the present solution is not limited to the particular architecture shown in FIG. 9. For example, the implementation may be absent of distance operators **918, 920** as discussed below.

The soft demodulator **802** is generally configured to generate soft symbol estimates of the original modulation symbols in which a most likely value is determined for each symbol contained in a given signal component (e.g., an interfering signal). The soft demodulation provides better estimates of original data than the hard decision demodulation sometimes employed in conventional solutions. Soft demodulator **802** is described below in relation to scenarios in which each symbol comprises a complex number with an I component and a Q component. The present solution is not limited in this regard. Operations of the soft demodulator **802** are clocked at a rate at which a source is transmitting the symbols.

As shown in FIG. 9, the soft demodulator **802** may comprise a constellation partitioner **902,** sub-constellation rotation operators **904, 906,** hard QPSK decoders **908, 914,** soft QPSK decoders **910, 912,** optional distance operators **918, 920,** a sub-constellation probability estimator 916, soft symbol back rotation operators **926, 928,** and combiners **924, 930, 940.** Each of the listed components may be implemented in hardware, software or a combination of hardware and software. In some scenarios, soft demodulator **802** may be implemented in an FPGA and/or at least some of its operations are implemented via LUT(s).

The constellation partitioner **902** is configured to: (i) receive a signal **R** comprising information modulated in accordance with a given modulation scheme; and (ii) partition the constellation of **R** into two or more constituent QPSK sub-constellations. Signal **R** may include an I component and a Q component. The modulation scheme can include, but is not limited to, 8PSK or other higher order modulation scheme. The present solution is described in relation to 8PSK for ease of discussion. The architecture of the soft demodulator **802** may be adapted for use with other modulation schemes as should be understand by those skilled in the art.

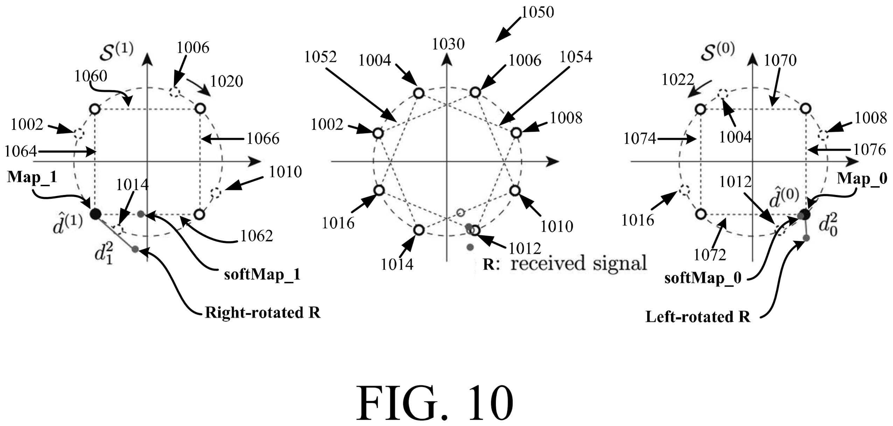

In the 8PSK scenario, the 8PSK constellation is partitioned into two constituent cub-constellations ***S⁽¹⁾*** and ***S⁽⁰⁾**,* as shown in FIG. 3 Each sub-constellation ***S⁽¹⁾**, **S⁽⁰⁾*** comprises four signal points on a constellation diagram. For example, with reference to FIG. 10, sub-constellation ***S⁽¹⁾*** comprises signal points **1002, 1006, 1010, 1014** on constellation diagram **1050** which define a square **1052** with equal sides, or a QPSK sub-constellation in other words. Sub-constellation ***S⁽⁰⁾*** comprises signal points **1004, 1008, 1012, 1016** on constellation diagram **1050** and also define a square **1054** with equal sides.

The sub-constellations ***S⁽¹⁾**, **S⁽⁰⁾*** are then passed to the sub-constellation rotation operators **904, 906.** Sub-constellation rotation operator **904** performs operations to obtain an axis-aligned constituent QPSK constellation ***S'⁽¹⁾*** by rotating a sub-constellation ***S⁽¹⁾*** by a certain amount in a first direction to align the first signal points with an axis (e.g., axis **1030** of FIG. 10) of a constellation diagram (e.g., constellation diagram **1050** of FIG. 10), while sub-constellation rotation operator **906** performs operations to obtain a constituent QPSK constellation ***S'⁽⁰⁾*** by rotating a sub-constellation ***S⁽⁰⁾*** by the same amount in an opposite second direction to align the second signal points with the axis of the constellation diagram. These constellation rotations are performed because the QPSK demodulator works with signal points aligned with the axis of the constellation diagram.

The sub-constellations of the 8PSK signal are offset from the axis by 22.5 degrees. Rotation by 22.5° is performed in two opposite directions in the 8PSK scenario. An illustration is provided in FIG. 10 that is useful for understanding the sub-constellation rotations of blocks **904, 906** in the 8PSK scenario. The center illustration represents the 8PSK constellation diagram for the transmitted signal **R** which includes 8 possible signal points **1002, 1004, 1006, 1008, 1010, 1012, 1014, 1016.** The 8 signal point candidates were previously partitioned into two constituent QPSK sub-constellations **1002/1006/1010/1014** and **1004/1008/1012/1016.** The left illustration shows that the signal points **1002, 1006, 1010, 1014** of the first sub-constellation are rotated in the right direction **1020** by 22.5°. This rotation is performed to align the signal points **1002, 1006, 1010, 1014** with axis **1030.** Signal points are aligned with the axis when they are respectively located at 45°, 135°, 225° and 315° on the constellation graph. The signal points **1002, 1006, 1010, 1014** may also be considered aligned with axis **1030** when, for example, (i) a theoretical line **1060** connecting the top two signal points **1002, 1006** extends perpendicular to axis **1030,** (ii) a theoretical line **1062** connecting the bottom two signal points **1010, 1014** extends perpendicular to axis **1030,** (iii) a theoretical line **1064** extending between the left two signal points **1002, 1014** extends parallel to axis **1030,** (iv) a theoretical line **1066** extending between the right two signal points **1006, 1010** extends parallel to axis **1030,** and/or (v) the axis **1030** passes through the centers of lines **1060, 1062.** The right illustration shows the signal points **1004, 1008, 1012, 1016** are rotated in a left direction **1022** by 22.5°. This rotation is performed to align the signal points **1004, 1008, 1012, 1016** with axis **1030.** The signal points **1004, 1008, 1012, 1016** are considered aligned with axis **1030** when, for example, they are respectively located at 45°, 135°, 225° and 315° on the constellation graph. The signal points may also be considered aligned when (i) a theoretical line **1070** connecting the top two signal points **1004, 1008** extends perpendicular to axis **1030,** (ii) a theoretical line **1072** connecting the bottom two signal points **1012, 1016** extends perpendicular to axis **1030,** (iii) a theoretical line **1074** extending between the left two signal points **1004, 1016** extends parallel to axis **1030,** (iv) a theoretical line **1076** extending between the right two signal points **1008, 1012** extends parallel to axis **1030,** and/or (v) the axis **1030** passes through the centers of lines **1070, 1072.** The result of the right rotation **1020** is referred to as constituent QPSK constellation ***S'⁽¹⁾**,* and the result of the left rotation **1022** is referred to as constituent QPSK constellation ***S'⁽⁰⁾**.* The present solution is not limited to the particulars of FIG. 10.

Referring back to FIG. 9, constituent QPSK constellation ***S'⁽¹⁾*** is passed to hard QPSK decoder **908** and soft QPSK decoder **910.** Constituent QPSK constellation ***S'⁽⁰⁾*** is passed to hard QPSK decoder **914** and soft QPSK decoder **912.** Any known or to be known hard QPSK decoder can be used in blocks **908, 914** to generate hard decisions **Map_1** and **Map_0.** Each soft QPSK decoders **910, 912** may implement circuits **100, 200** discussed above to generate soft decisions **softMap_1** and **softMap_0,** but other implementations are also possible.

In block **916,** probabilities may be computed using only scalar difference and +1 -1 selectors. The square of the distance may be conceptual in terms of implementation but is described here in relation to optional blocks **918, 920** to facilitate an understanding of the present solution. The hard decisions **Map_1** and **Map_0** may be passed to optional distance operators **918, 920.** Each distance operator **918, 920** generally determines a distance between a receive constellation point and the nearest point in the constituent QPSK constellation. More specifically, distance operator **918** performs operations to compute a distance ***d₁²*** between the right-rotated signal **R** and the hard decision **Map_1** of the rotated subconstellation ***S'⁽¹⁾**.* Distance operator **920** performs operations to compute a distance ***d₀²*** between the left-rotated signal **R** and the hard decision **Map_0** of the rotated subconstellation *S'⁽⁰⁾.*

Illustrations of these distances ***d₁², d₀²*** are provided in FIG. 10 for the 8PSK scenario. In FIG. 10, distance ***d₀²*** is relatively short as compared to distance ***d₁²**.* This indicates that constellation ***S⁽⁰⁾*** is more likely to have been transmitted as opposed to constellation ***S⁽¹⁾**.*

A key aspect of the present solution is that it does not require execution of the complicated direct implementation of these equations. Still, a discussion of normalization operations is provided here to facilitate an understanding of the present invention. Distances ***d₁², d₀²*** may be passed to the sub-constellation probability estimator **916.** Sub-constellation probability estimator **916** may perform operations to normalize the distances ***d₁², d₀²*** into probabilities ***P(S⁽⁰⁾)**, **P(S⁽¹⁾)*** that can be used to weigh the two QPSK soft symbol estimates. This normalization operation may be defined by the following mathematical equations (19)-(21). $p \left(S\left(0\right)\right) = 0.5 \left(tanh\left(\left({{d}_{1}}^{2}-{{d}_{0}}^{2}\right)/2{N}_{0}\right)+1\right)$ (19) $P \left({S}^{\left(1\right)}\right) = p \left(S\left(0\right)\right)$ (20) $P \left({S}^{\left(0\right)}\right) = 1 - {p}^{\left(S\left(0\right)\right)}$ (21) Each probability provides a measure of the likelihood as to whether the respective sub-constellation was transmitted.

Probability ***P(S⁽¹⁾)*** is passed to combiner **924** where it is combined with **softMap_1** which was back rotated in previous block **926.** For example, in the 8PSK scenario, soft symbol **softMap_1** is back rotated by +22.5°. The result of this combination operation is referred to as ***Sym_1.*** Probability ***P(S⁽⁰⁾)*** is passed to combiner **930** where it is combined with **softMap_0** which was back rotated in previous block **928.** For example, in the 8PSK scenario, soft symbol **softMap_0** is back rotated by -22.5°. The result of this combination operation is referred to as ***Sym_0.***

***Sym_1*** and ***Sym_0*** are combined in block **940** to obtain a soft decision estimation ***Sym*** for the received symbol. Soft decision estimation ***Sym*** is a weighted combination of back rotated **softMap_1** and **softMap_0.**

The present solution is not limited to the architecture shown in FIG. 9. Another architecture implementing the present solution is provided in FIG. 11. The operations of the circuit shown in FIG. 11 are the same as or similar to those discussed above in relation to FIG. 10. For example, these operations generally involve: (1) decomposing the non-QPSK signal constellations into QPSK sub-constellation (or partitioning a constellation for a given non-QPSK modulation scheme into two or more sub-constellations (wherein the non-QPSK modulation scheme was used to generate a complex non-QPSK symbol from a block of bits for transmission)); (2) affinely transforming (e.g., rotating) the QPSK sub-constellations by ±**X**° to obtain constituent QPSK constellations (where **X** is selected in accordance with the modulation scheme being used); (3) applying soft QPSK decoders to the constituent QPSK constellations to generate QPSK sub-constellation soft symbols; (4) inverse affinely transforming (e.g., back rotating) the QPSK sub-constellation soft symbols; (5) optionally computing a distance from an input signal point to a nearest signal point in each constituent QPSK constellation; (6) optionally normalizing the distances into probabilities each indicating a likelihood that the respective sub-constellation was used to modulate information on a carrier signal for transmission; (7) combining each inverse affine transformed (e.g., back rotated) QPSK soft symbol with a respective one of the probabilities to generate a weighted QPSK soft symbol; and (8) combining the weighted QPSK soft symbols to obtain a soft decision estimation for a received non-QPSK symbol.

The circuit of FIG. 11 may be modified to simplify the 3^{rd} tanh( ) function by utilizing symmetries in the difference of squares, to $\sqrt{2} \left(Re\left({y}_{r}\right)\left({\hat{d}}_{1 , r}-{\hat{d}}_{0 , r}\right)+Im\left({y}_{r}\right)\left({\hat{d}}_{1 , i}-{\hat{d}}_{0 , i}\right)\right.$ which requires no multiples, only sign changes, as the symbol differences only assume {-1,0,1}. The result r from the above mathematical equation would be used as the only input into the tanh( ) function. Accordingly, mathematical equation (19) could be re-written as follows. ${p}^{\left(S\left(0\right)\right)} = 0.5 \left(tanh\left(r/2{N}_{0}\right)+1\right)$

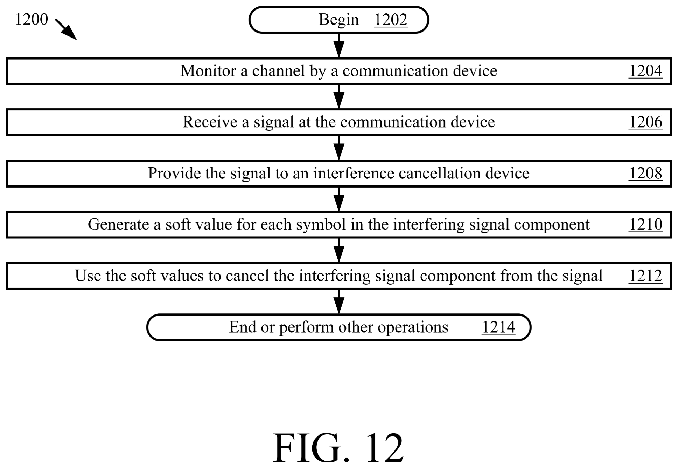

FIG. 12 provides a flow diagram of an illustrative method **1200** for mitigating interference. Method **1200** implements the process described above in relation to FIGS. 7-11. Method **1200** begins with **1202** and continues with **1204** where a communication device (e.g., communication device **404** or **406** of FIG. 4) performs operations to monitor a communications channel (e.g., a satellite communication channel). Methods for monitoring communication channels are well known in the art. The communication device receives a signal (e.g., signal **R** of FIG. 7) in **1206.** Methods for receiving signals are well known in the art.

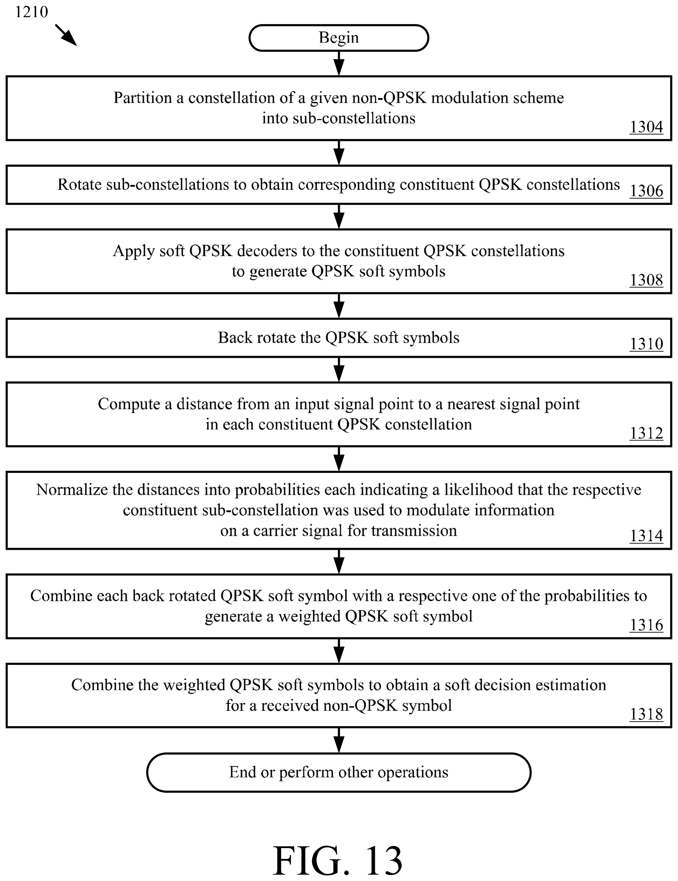

In **1208,** the received signal is provided to an interference cancellation device (e.g., interference cancellation device **612** of FIG. 6). The interference cancellation device may be provided in a receiver (e.g., receiver **600** of FIG. 6) of the communication device. At the interference cancellation device, operations are performed in **1210** to generate a soft value for each symbol in the interfering signal component. The manner in which the soft values are generated will be discussed in detail below in relation to FIG. 13. The soft values are then used in **1212** to cancel the interfering signal component from the received signal for mitigating the effect of interference.

As shown in FIG. 13, each soft value is generated in block **1210** by: **(1304)** partitioning a constellation for a given non-QPSK modulation scheme into two or more sub-constellations (wherein the non-QPSK modulation scheme was used to generate a complex non-QPSK symbol from a block of bits for transmission); **(1306)** rotating the sub-constellations by ±**X**° to obtain corresponding constituent QPSK constellations (where **X** is selected in accordance with the modulation scheme being used); **(1308)** applying soft QPSK decoders to the constituent QPSK constellations to generate QPSK soft symbols; **(1310)** back rotating the QPSK soft symbols; **(1312)** computing a distance from an input signal point to a nearest signal point in each constituent QPSK constellation; **(1314)** normalizing the distances into probabilities each indicating a likelihood that the respective sub-constellation was used in the transmission of a given symbol; **(1316)** combining each back rotated QPSK soft symbol with a respective one of the probabilities to generate a weighted QPSK soft symbol; and **(1318)** combining the weighted QPSK soft symbols to obtain a soft decision estimate for a received non-QPSK symbol.

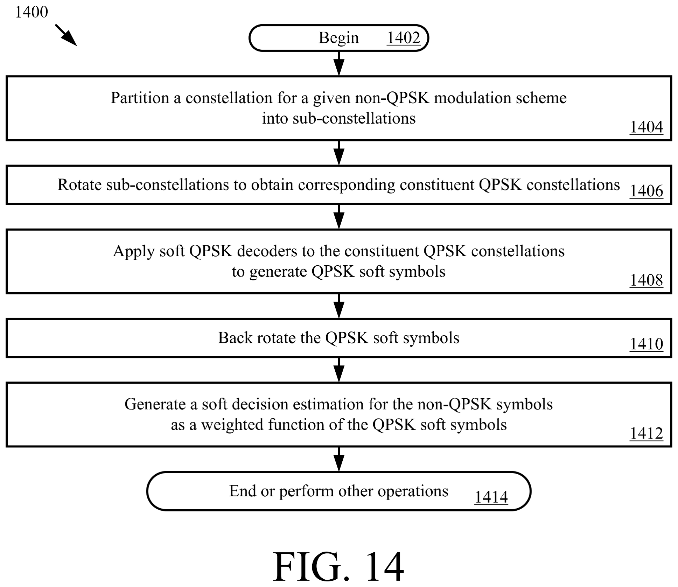

FIG. 14 provides a flow diagram of a method **1400** for generating a soft value for a non-QPSK symbol in an input signal. The input signal contains information in accordance with a non-QPSK modulation scheme. The non-QPSK modulation scheme comprises 8PSK, 16 PSK, 16QAM, or others.

Method **1400** begins at block **1402** and continues to block **1404** where a circuit performs operations to partition a constellation for a non-QPSK modulation scheme into constituent sub-constellations. A first one of the constituent sub-constellations may be associated with one subset of the symbols of the non-QPSK symbol. A second one of the constituent sub-constellations may be associated with the complementary subset of the symbols of the non-QPSK symbol, as exemplified in FIG. 10 for 8 PSK. The constituent sub-constellations are rotated by the circuit in block **1406** to obtain constituent QPSK constellations. The constituent sub-constellations may be rotated in opposite directions by a same amount.

The circuit performs soft QPSK decoder operations in block **1408** to generate QPSK soft symbols based on the constituent QPSK constellations. The QPSK soft symbols are back rotated in block **1410.** The circuit generates a soft decision estimation for the non-QPSK symbol as a weighted function of the QPSK soft symbols, as shown by block **1412.** Subsequently, method **1400** continues to block **1414** where it ends or other operations are performed. The other operations can include, but are not limited to, returning to block **1402,** or using the soft decision estimation to mitigate interference in the input signal.

The soft decision estimation may be generated in block **1412** by: computing a distance from a received signal point to a nearest signal point in each of the constituent QPSK constellations; normalizing the distances into probabilities that each indicates a likelihood that a respective one of the sub-constellations was used to modulate information on a carrier signal for transmission; combining each back rotated QPSK soft symbol with a respective one of the probabilities to generate a weighted QPSK soft symbol; and/or combining the weighted QPSK soft symbols.

The present solution reduces the size of the memory (e.g., ROM) needed to perform 8-PSK soft-decision. It is some thirty-two times smaller than a direct implementation of the mathematical formulas. The present solution can be applied to higher orders of modulation (e.g., 16 PSK and/or 16 QAM) with some additional modifications. Similar hardware resource savings are expected for these higher order modulations while using less hardware resources than direct implementations of their respective mathematical formulations. Generically, the new 8PSK soft symbol estimator of the present solution is a streamlined hardware implementation of the optimal 8PSK soft symbol estimator, applicable to any system implementation where soft symbols may be required, notably in turbo equalization, turbo or concatenated coded modulation systems, interference cancelation systems such as GATEKEEPER, and other potential applications.

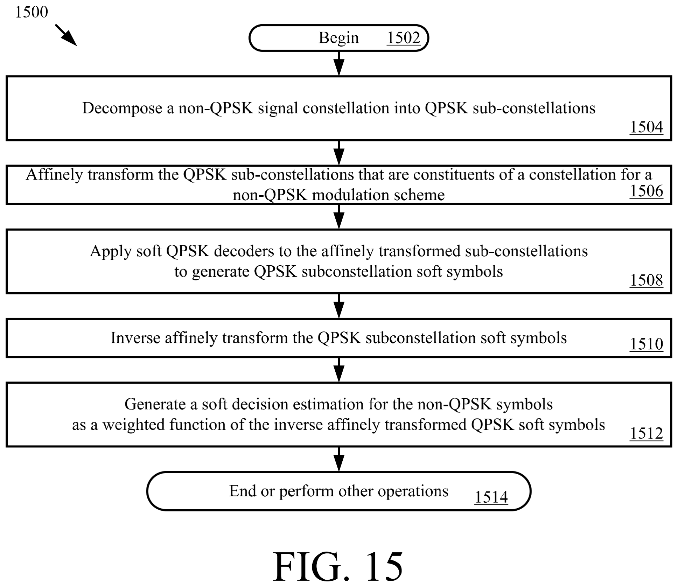

FIG. 15 provides a flow diagram of a method **1500** for generating a soft value for a non-QPSK modulation symbol. Method **1500** begins at block **1502** and continues with the operations of blocks **1504-1512.** These operations involve: **(1504)** decomposing a non-QPSK signal constellation into QPSK sub-constellations; **(1506)** affinely transforming the QPSK sub-constellations that are constituents of a constellation for a non-QPSK modulation scheme; **(1508)** applying soft QPSK decoders to the affinely transformed sub-constellations to generate QPSK sub-constellation soft symbols; **(1510)** inverse affinely transforming the QPSK sub-constellation soft symbols; and **(1512)** generating a soft decision estimation for the non-QPSK symbol as a weighted function of the inverse affinely transformed QPSK soft symbols.

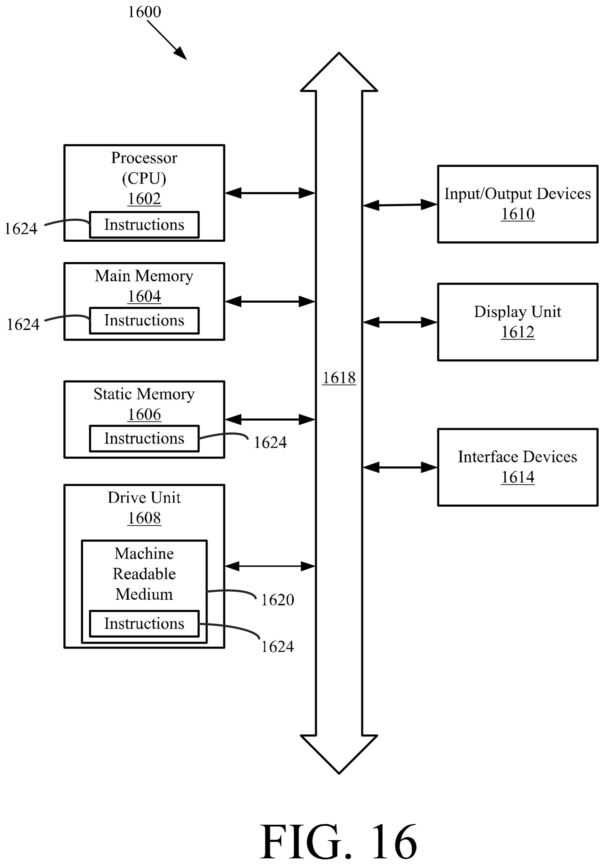

Referring now to FIG. 16, there is shown a hardware block diagram comprising an example computer system **1600** that can be used for implementing all or part of the interference cancellation device **612** of FIG. 6. The machine can include a set of instructions which are used to cause the circuit/computer system to perform any one or more of the methodologies discussed herein. While only a single machine is illustrated in FIG. 16, it should be understood that in other scenarios the system can be taken to involve any collection of machines that individually or jointly execute one or more sets of instructions as described herein.

The computer system **1600** is comprised of a processor **1602** (e.g., a central processing unit (CPU)), a main memory **1604,** a static memory **1606,** a drive unit **1608** for mass data storage and comprised of machine readable media **1620,** input/output devices **1610,** a display unit **1612** (e.g., a liquid crystal display (LCD) or a solid state display, and one or more interface devices **1614.** Communications among these various components can be facilitated by means of a data bus **1618.** One or more sets of instructions **1624** can be stored completely or partially in one or more of the main memory **1604,** static memory **1606,** and drive unit **1608.** The instructions can also reside within processor **1602** during execution thereof by the computer system. The input/output devices **1610** can include a keyboard, a multi-touch surface (e.g. a touchscreen) and so on. The interface device(s) **1614** can be comprised of hardware components and software or firmware to facilitate an interface to external circuitry. For example, in some scenarios, the interface devices **1614** can include one or more analog-to-digital (A/D) converters, digital-to-analog (D/A) converters, input voltage buffers, output voltage buffers, voltage drivers and/or comparators. These components are wired to allow the computer system to interpret signal inputs received from external circuitry, and generate the necessary control signals for certain operations described herein.

Drive unit **1608** can comprise a machine readable medium **1620** on which is stored one or more sets of instructions **1624** (e.g. software) which are used to facilitate one or more of the methodologies and functions described herein. The term "machine-readable medium" shall be understood to include any tangible medium that is capable of storing instructions or data structures which facilitate any one or more of the methodologies of the present disclosure. Exemplary machine-readable media can include solid-state memories, electrically erasable programmable read-only memory (EEPROM) and flash memory devices. A tangible medium as described herein is one that is non-transitory insofar as it does not involve a propagating signal.

Computer system **1600** should be understood to be one possible example of a computer system which can be used in connection with the various implementations disclosed herein. However, the systems and methods disclosed herein are not limited in this regard and any other suitable computer system architecture can also be used without limitation. Dedicated hardware implementations including, but not limited to, application-specific integrated circuits, programmable logic arrays, and other hardware devices can likewise be constructed to implement the methods described herein. Applications that can include the apparatus and systems broadly include a variety of electronic and computer systems. Thus, the exemplary system is applicable to software, firmware, and hardware implementations.

Further, it should be understood that embodiments can take the form of a computer program product on a tangible computer-usable storage medium. The computer-usable storage medium can have computer-usable program code embodied in the medium. The term computer program product, as used herein, refers to a device comprised of all the features enabling the implementation of the methods described herein. Computer program, software application, computer software routine, and/or other variants of these terms, in the present context, mean any expression, in any language, code, or notation, of a set of instructions intended to cause a system having an information processing capability to perform a particular function either directly or after either or both of the following: a) conversion to another language, code, or notation; or b) reproduction in a different material form.

In view of the forgoing discussion, the present solution concerns implementing systems and methods for generating a soft value for a non-QPSK modulation symbol from an input signal. The methods comprise: decomposing a non-QPSK signal constellation into QPSK sub-constellations; affine transforming (such as rotating) the QPSK sub-constellations that are constituents of a constellation for a non-QPSK modulation scheme; applying soft QPSK decoders to the affine transformed (e.g., or rotated) sub-constellations to generate QPSK sub-constellation soft symbols; inverse affine transforming (such as back rotating) the QPSK sub-constellation soft symbols; and/or generating a soft decision estimation for the non-QPSK symbol as a weighted function of the inverse affinely transformed QPSK sub-constellation soft symbols.

The input signal may comprise information encoded on a carrier signal in accordance with the non-QPSK modulation scheme. The non-QPSK modulation scheme may comprise 8PSK, 16PSK, 16 QAM, or others. A first one of the QPSK sub-constellations may be associated with a first subset of the symbols of the non-QPSK symbol. A second one of the QPSK sub-constellations may be associated with the complimentary subset of the symbols of the non-QPSK symbol. The QPSK sub-constellations may be rotated in opposite directions by a same amount.

The soft decision estimation may be generated by, for example: computing a distance from a received signal point to a nearest signal point in each of the rotated QPSK sub-constellations; normalizing the distances into probabilities that each indicates a likelihood that a respective one of the QPSK sub-constellations was used to modulate information on a carrier signal for transmission; combining each inverse affinely transformed (or back rotated) QPSK soft symbol with a respective one of the probabilities to generate a weighted QPSK soft symbol; and/or combining the weighted QPSK soft symbols. The soft decision estimation may be used, for example, to mitigate interference in the input signal.

The present solution also concerns a soft demodulator comprising a circuit that generates soft values for the binary labels of a non-QPSK symbol, such as likelihood values, from an input signal. The soft values may be generated by: affinely transforming (e.g., or rotating) QPSK sub-constellations that are constituents of a constellation for a non-QPSK modulation scheme; applying soft QPSK demodulator to the thus affinely transformed (e.g., or rotated) sub-constellations to generate soft symbol values for the binary labels of the sub-constellation; optionally inverse affinely transforming (e.g., or back rotating) the soft symbol values; and/or combining the binary soft values into the soft values for the binary labels of the non-QPSK constellation or generating a soft decision estimation for the non-QPSK symbol as a weighted function of the inverse affinely transformed QPSK sub-constellation soft symbols. The soft decision estimation may be generated by: normalizing the distances into probabilities that each indicates a likelihood that a respective one of the QPSK sub-constellations was used to modulate information on a carrier signal for transmission; combining each inverse affinely transformed (e.g., or back rotated) QPSK soft symbol with a respective one of the probabilities to generate a weighted soft symbol; and/or combining the weighted soft symbols.

The described features, advantages and characteristics disclosed herein may be combined in any suitable manner. One skilled in the relevant art will recognize, in light of the description herein, that the disclosed systems and/or methods can be practiced without one or more of the specific features. In other instances, additional features and advantages may be recognized in certain scenarios that may not be present in all instances.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

Although the systems and methods have been illustrated and described with respect to one or more implementations, equivalent alterations and modifications will occur to others skilled in the art upon the reading and understanding of this specification and the annexed drawings. In addition, while a particular feature may have been disclosed with respect to only one of several implementations, such feature may be combined with one or more other features of the other implementations as may be desired and advantageous for any given or particular application. Thus, the breadth and scope of the disclosure herein should not be limited by any of the above descriptions. Rather, the scope of the invention should be defined in accordance with the following claims and their equivalents.

## Claims

1. A method for generating a soft value for a non-QPSK modulation symbol, comprising:
decomposing a non-QPSK signal constellation into QPSK sub-constellations;
affinely transforming the QPSK sub-constellations that are constituents of a constellation for a non-QPSK modulation scheme;
applying soft QPSK decoders to the affinely transformed sub-constellations to generate QPSK sub-constellation soft symbols;
inverse affinely transforming the QPSK sub-constellation soft symbols; and
generating a soft decision estimation for the non-QPSK symbol as a weighted function of the inverse affinely transformed QPSK soft symbols.

2. The method according to claim 1, wherein the non-QPSK modulation symbol is obtained from a corrupted input signal comprising information encoded on a carrier signal in accordance with the non-QPSK modulation scheme.

3. The method according to claim 1, wherein the non-QPSK modulation scheme comprises 8 Phase Shift Keying (PSK), 16 PSK or 16 quadrature amplitude modulation (QAM); and/or
wherein a first one of the QPSK sub-constellations is associated with a first subset of the symbols of the non-QPSK symbol, and a second one of the QPSK sub-constellations is associated with the complimentary subset of the symbols of the non-QPSK symbol; and/or
wherein the QPSK sub-constellations are rotated in opposite directions by a same amount.

4. The method according to claim 1, wherein the soft decision estimation is generated based on a distance from a received signal point to a nearest signal point in each of the rotated sub-constellations.

5. The method according to claim 4, wherein the soft decision estimation is generated based on normalization of the distances into probabilities that each indicates a likelihood that a respective one of the QPSK sub-constellations was used to modulate information on a carrier signal for transmission.

6. The method according to claim 5, wherein the soft decision estimation is generated by combining each inverse affinely transformed QPSK soft symbol with a respective one of the probabilities to generate a weighted QPSK soft symbol.

7. The method according to claim 6, wherein the soft decision estimation is generated by combining the weighted QPSK soft symbols.

8. The method according to claim 1, further comprising using the soft decision estimation to mitigate interference in the input signal.

9. A soft demodulator, comprising:
a circuit that generates soft values for binary labels of a non-QPSK symbol from an input signal by:
affinely transforming sub-constellations that are constituents of a constellation for a non-QPSK modulation scheme;
applying soft QPSK demodulator to the transformed sub-constellations to generate soft symbol value for the binary labels of the sub-constellation;
and
combining the binary soft values into the soft values for the binary labels of the non-QPSK constellation.

10. The soft demodulator according to claim 9, wherein the input signal comprises information encoded on a carrier signal in accordance with the non-QPSK modulation scheme; and/or
wherein the non-QPSK modulation scheme comprises 8 Phase Shift Keying (PSK), 16 PSK or 16 quadrature amplitude modulation (QAM); and/or
wherein a first one of the sub-constellations is associated with a first subset of the symbols of the non-QPSK symbol, and a second one of the sub-constellations is associated with the complimentary subset of symbols of the non-QPSK symbol; and/or
wherein the sub-constellations are rotated in opposite directions by a same amount.

11. The soft demodulator according to claim 9, wherein the soft decision estimation is generated based on a distance from a received signal point to a nearest signal point in each of the rotated sub-constellations.

12. The soft demodulator according to claim 11, wherein the soft decision estimation is generated based on a normalization of the distances into probabilities that each indicates a likelihood that a respective one of the sub-constellations was used to modulate information on a carrier signal for transmission.

13. The soft demodulator according to claim 12, wherein the soft decision estimation is generated by combining each inverse affinely transformed QPSK soft symbol with a respective one of the probabilities to generate a weighted QPSK soft symbol.

14. The soft demodulator according to claim 13, wherein the soft decision estimation is generated by combining the weighted QPSK soft symbols.

15. The soft demodulator according to claim 9, further comprising using the soft decision estimation to mitigate interference in the input signal.
